# EUROPEAN PATENT APPLICATION

(11) **EP 4 607 613 A1**
(43) Date of publication of application: **27.08.2025**
(21) Application number: 24813093.2
(22) Date of filing: 26.09.2024
(51) Int. Cl.: H01M 4/505, C01G 53/00, C01G 51/00, H01M 4/36, H01M 4/62, H01M 4/525, H01M 10/0525

(54) **HIGH-NICKEL COBALT-FREE POSITIVE ELECTRODE MATERIAL CAPABLE OF DUAL RESIDUAL ALKALI REDUCTION AND PREPARATION METHOD THEREFOR**

(30) Priority: 05.01.2024 CN 202410015280
(71) Applicant: Henan Kelong New Energy Co., Ltd., Xinxiang, Henan 453000 (CN); Henan Kelong Power Supply Material Co., Ltd., Xinxiang, Henan 453000 (CN)
(72) Inventor: CHENG, Di, Xinxiang, Henan 453000 (CN); XU, Yunjun, Xinxiang, Henan 453000 (CN); ZHOU, Simeng, Xinxiang, Henan 453000 (CN); LIU, Jiani, Xinxiang, Henan 453000 (CN); WAN, Chuanheng, Xinxiang, Henan 453000 (CN); HAO, Zhimin, Xinxiang, Henan 453000 (CN); LI, Hao, Xinxiang, Henan 453000 (CN); ZUO, Gaofeng, Xinxiang, Henan 453000 (CN); WEN, Wanchao, Xinxiang, Henan 453000 (CN)
(74) Representative: Dehns Germany Partnerschaft mbB
(86) International application number: PCT/CN2024/121514
(87) International publication number: WO 2025/145689

(57) **Abstract**

Provided in the present disclosure are a high-nickel cobalt-free positive electrode material with double reduction of residual alkali and a preparation method thereof. A chemical expression of the high-nickel cobalt-free positive electrode material is LiₓNi_{y}Mn_{1-y}A_{z}O₂, where 0.75<y≤0.95, 0.95≤x≤1.15, and 0.001<z≤0.005. In the present disclosure, primary reduction of residual alkali is realized through water washing, residual lithium in the material is consumed by forming perovskite in situ on a surface of the material, so as to realize secondary reduction of the residual alkali, and a LaₐLi_{b}CoO₃ perovskite coating layer may be formed simultaneously. Because of formation of the perovskite coating layer, the positive electrode material has high lithium ion conductivity, good capacity retention capability and rate performance, and has high reversibility. The prepared high-nickel cobalt-free positive electrode material is low in residual alkali, high in discharging capacity, good in rate performance, and good in battery cycling performance.

## Description

This application claims priority to Chinese Patent Application No. 202410015280.7 filed on January 05, 2024, the application of which is hereby incorporated by reference in its entirety.

### Technical Field

The present disclosure relates to cobalt-free positive electrode materials for lithium batteries, and in particular, to a high-nickel cobalt-free positive electrode material with double reduction of residual alkali and a preparation method thereof.

### Background

As the automotive industry transitions to electrification, rechargeable batteries must also meet the demands of the future. Despite some success in efforts to improve battery performance, there is still a high cost barrier. These challenges to battery costs are mainly related to skyrocketing prices and increased demand for Transition Metals (TMs), particularly Cobalt (Co), which is the core material component of widely used commercial positive electrodes, for example, LiCoO₂, LiNiₓMn_{y}Co_{1-x-y}O₂, and LiNi_{0.8}Co_{0.15}Al_{0.05}O₂. In recent years, Co has lost its appeal economically. In response to these cost pressures, a person skilled in the art is working to develop low Co or even Co-free positive electrodes without sacrificing battery performance. Although several possible alternatives including lithium-rich and manganese-rich positive electrodes, high-voltage spinel LiNi_{0.5}Mn_{1.5}O₄, and disordered rock salt have been highlighted as viable alternatives to cobalt-containing positive electrodes, however, the alternatives have capacity and stability that are difficult to actually obtain, and thus cannot be used for large-scale commercial purposes. Therefore, high-Ni low-Co or Co-free layered positive electrodes have become a hot research topic in the battery industry.

However, if a nickel content is higher, there are more alkaline substances formed on the surface of a positive electrode, especially LiOH and Li₂CO₃, which may accelerate capacity fading, and exacerbate structural phase transition, seriously affecting the air stability of a positive electrode material and processing performance in pulping and coating processes, thus affecting the safety and cyclicity of batteries during using. Therefore, reducing the content of residual alkali on a surface of a high-nickel material is an urgent technical problem to be solved.

For example, in CN110148728A, LLTO-coated ternary material is obtained by adding LiNO₃, La(NO₃)₃, and Ti[OCH(CH₃)₂]₄ through a series of operations, and the cycling stability and rate performance of a positive electrode material obtained by using the method are good. However, since the method extra adds a Li source, residual alkali in the material cannot be reduced.

For example, in CN112086638A, a battery positive electrode material is dispersed in an organic solvent of a phosphorus-containing organic compound, and through liquid phase mixing or in situ polymerization, the phosphorus-containing organic compound is uniformly distributed on a surface of the battery positive electrode material. In a subsequent calcination process, phosphorus reacts with surface lithium residues to generate lithium phosphate in situ, so as to obtain the battery positive electrode material coated with lithium phosphate. Therefore, adverse effects of water to the battery positive electrode material are avoided, the structure stability of the battery positive electrode material is maintained, the surface lithium residues are consumed, a degree of alkalinity is reduced, and a uniform lithium phosphate coating is formed on the surface of the battery positive electrode material, thereby improving the stability of the battery positive electrode material in air. However, the method cannot effectively enhance electrochemical performance or improve the rate performance of the material, is complex in process, and thus not conductive to large-scale production. Therefore, a method for preparing a high-nickel cobalt-free positive electrode material still needs to be improved.

### Summary

The technical problem mainly to be solved in the present disclosure is to overcome the deficiencies mentioned in BACKGROUND that a LLTO-coated ternary material obtained by adding LiNO₃, La(NO₃)₃, and Ti[OCH(CH₃)₂]₄ cannot reduce residual alkali in the material and cannot effectively improve electrochemical performance due to lithium phosphate coated on the surface, and to provide a high-nickel cobalt-free positive electrode material with double reduction of residual alkali and a preparation method thereof.

In order to implement the above objectives, the technical solution used in the present disclosure is a method for preparing a high-nickel cobalt-free positive electrode material with double reduction of residual alkali, including the following steps.

At S1, a high-nickel cobalt-free precursor is fully mixed with a lithium salt and a doping agent A to obtain a mixture B, where a general formula of the high-nickel cobalt-free precursor is Ni_{y}Mn_{1-y}(OH)₂, and 0.75<y≤0.95; a molar ratio of Li in the lithium salt to Ni_{y}Mn_{1-y}(OH)₂ is (0.95-1.15):1, and the doping agent A accounts for 0.1-0.5 mol% of the total amount of the lithium salt and the Ni_{y}Mn_{1-y}(OH)₂; and the doping agent A is a compound containing at least one of Al, Zr, W, Mo, or Nb.

At S2, primary sintering according to a first temperature curve, cooling, and pulverizing are performed on the mixture B under an oxygen atmosphere, so as to obtain a high-nickel cobalt-free positive electrode material C, where the first temperature curve is that a temperature is heated to 800-850 °C at a heating rate of 3-10 °C/min under the oxygen atmosphere, and after a required temperature reaches, the temperature is held for 3-20 h.

At S3, the high-nickel cobalt-free positive electrode material C is washed with water, and then solid-liquid separation is performed to obtain a filter cake.

At S4, a La source and a Co source are added to the filter cake, then the mixtures are put into a drying device together for rotation drying, and the dried materials are put into a mixer for uniform mixing for 10-30 min after drying, so as to obtain a high-nickel cobalt-free positive electrode material D, where a matrix Li ranges from 0.2500 to 0.4500 ppm after the positive electrode material is pulverized, the La source accounts for 0.5-3 wt% of the filter cake, and a molar ratio of La in the La source to Co in the Co source is 0.5-0.9:1.

At S5, secondary sintering according to a second temperature curve, cooling, and sieving are performed on the high-nickel cobalt-free positive electrode material D under the oxygen atmosphere, so as to obtain a high-nickel cobalt-free positive electrode material of which chemical formula is LiₓNi_{y}Mn_{1-y}A_{z}O₂ and having a surface coated with LaₐLi_{b}CoO₃ perovskite, where 0.75<y≤0.95, 0.95≤x≤1.15, and 0.001<z≤0.005; and the second temperature curve is that a temperature is heated to 300-450 °C at a heating rate of 3-7 °C/min under the oxygen atmosphere, and after a required temperature reaches, the temperature is held for 3-15 h.

Preferably, the lithium salt in S1 is LiOH.

Preferably, a mass ratio of the water to the high-nickel cobalt-free positive electrode material C during washing in S3 is 1-3:1, a washing time is 10-30 min, then solid-liquid separation is performed for 15-30 min after the mixture enters a solid-liquid separation device.

Preferably, the La source added in S4 contains at least one of La₂O₃, La(NO₃)₃, or La₂(CO₃)·8H₂O, and the Co source contains at least one of Co₂O₃, Co(OH)₂, Co(NO₃)₂, CoCO₃, or Co₃O₄; and a particle size range of the La source is 10-400 nm, and a particle size range of the Co source is 20-300 nm.

Preferably, a drying manner in S4 is a rotatable drying device such as a cone-shaped spiral belt vacuum mixing dryer, a drying temperature is 100-200 °C, and a drying time is 0.5-7 h.

Preferably, the mixing of the high-nickel cobalt-free precursor with the lithium salt and the doping agent A in S1 uses a high mixing machine or a planetary ball mill, a mixing time of the high mixing machine is 10-30 min, and a mixing time of the planetary ball mill is 3-5 h.

A high-nickel cobalt-free positive electrode material of which chemical formula is LiₓNi_{y}Mn_{1-y}A_{z}O₂ and having a surface coated with LaₐLi_{b}CoO₃ perovskite is obtained by using the method for preparing a high-nickel cobalt-free positive electrode material with double reduction of residual alkali in the present disclosure, where 0.75<y≤0.95, 0.95≤x≤1.15, 0.001<z≤0.005, 0.5≤a≤0.9, and 0.3≤b≤1.5.

The present disclosure has the following beneficial effects: in the present disclosure, the method of performing water washing and solid-liquid separation on the high-nickel cobalt-free positive electrode material matrix and then adding an additive to the filter cake is used to coat the La source and Co source on the surface of the material, and then the perovskite coating layer is formed in situ on the surface of the material through sintering, such that primary reduction of residual alkali is realized through water washing, and Li(Li₂CO₃) required for the synthesis of the perovskite by the positive electrode material is a surface lithium residue of the positive electrode material, which may not only consume lithium in the material to realize secondary reduction of surface residual alkali, but also form the perovskite coating layer with the chemical formula being LaₐLi_{b}CoO₃ (LLCO). Furthermore, because of formation of the perovskite coating layer, the positive electrode material has high lithium ion conductivity, good capacity retention capability and rate performance, and has high reversibility. The high-nickel cobalt-free positive electrode material prepared using the method is low in residual alkali, high in discharging capacity, good in rate performance, and good in battery cycling performance, and thus has wide industrial application values.

### Brief Description of the Drawings

The drawings described herein are used to provide a further understanding of the present disclosure, and constitute a part of the present disclosure. The exemplary embodiments and descriptions of the present disclosure are used to explain the present disclosure and do not constitute an improper limitation of the present disclosure. In the drawings:
FIG. 1 shows an FESEM picture according to Example 2 of the present disclosure.
FIG. 2 shows an XRD pattern of an LLCO coating layer generated according to Example 2 of the present disclosure.
FIG. 3 shows a comparison diagram of first charging and discharging curves of a button-type half battery according to examples and comparative examples of the present disclosure.
FIG. 4 shows a comparison diagram of capacity retention of a button-type half battery according to examples and comparative examples of the present disclosure.
FIG. 5 shows a comparison diagram of discharging capacity retention at different rates of a button-type half battery according to examples and comparative examples of the present disclosure.

### Detailed Description of the Embodiments

It is to be noted that the embodiments in the present disclosure and the features in the embodiments may be combined with one another without conflict. The present disclosure will be described below in detail with reference to the drawings and the embodiments.

As described in BACKGROUND of the present disclosure, there are problems in the related art that a LLTO-coated ternary material cannot reduce residual alkali in the material and cannot effectively improve electrochemical performance due to lithium phosphate coated on the surface. In order to solve the above problems, a typical embodiment of the present disclosure provides a method for preparing a high-nickel cobalt-free positive electrode material with double reduction of residual alkali, including the following steps: at S1, a high-nickel cobalt-free precursor is fully mixed with a lithium salt and a doping agent A to obtain a mixture B, where a general formula of the high-nickel cobalt-free precursor is Ni_{y}Mn_{1-y}(OH)₂, and 0.75<y≤0.95; a molar ratio of Li in the lithium salt to Ni_{y}Mn_{1-y}(OH)₂ is (0.95-1.15):1, and the doping agent A accounts for 0.1-0.5 mol% of the total amount of the lithium salt and the Ni_{y}Mn_{1-y}(OH)₂; and the doping agent A is a compound containing at least one of Al, Zr, W, Mo, or Nb; at S2, primary sintering according to a first temperature curve, cooling, and pulverizing are performed on the mixture B under an oxygen atmosphere, so as to obtain a high-nickel cobalt-free positive electrode material C, where the first temperature curve is that a temperature is heated to 800-850 °C at a heating rate of 3-10 °C/min under the oxygen atmosphere, and after a required temperature reaches, the temperature is held for 3-20 h; at S3, the high-nickel cobalt-free positive electrode material C is washed with water, and then solid-liquid separation is performed to obtain a filter cake; S4, a La source and a Co source are added to the filter cake, then the mixtures are put into a drying device together for rotation drying, and the dried materials are put into a mixer for uniform mixing after drying, so as to obtain a high-nickel cobalt-free positive electrode material D, where the La source accounts for 0.5-3 wt% of the filter cake, and a molar ratio of La in the La source to Co in the Co source is 0.5-0.9:1; and at S5, secondary sintering according to a second temperature curve, cooling, and sieving are performed on the high-nickel cobalt-free positive electrode material D under the oxygen atmosphere, so as to obtain a high-nickel cobalt-free positive electrode material of which chemical formula is LiₓNi_{y}Mn_{1-y}A_{z}O₂ and having a surface coated with LaₐLi_{b}CoO₃ perovskite, where 0.75<y≤0.95, 0.95≤x≤1.15, and 0.001<z≤0.005; and the second temperature curve is that a temperature is heated to 300-450 °C at a heating rate of 3-7 °C/min under the oxygen atmosphere, and after a required temperature reaches, the temperature is held for 3-15 h.

In particular, the high-nickel cobalt-free precursor Ni_{y}Mn_{1-y}(OH)₂, the lithium salt, and the doping agent A are fully mixed to obtain the mixture B, and are well mixed during this process, ensuring that ratio of any portion of the high-nickel cobalt-free precursor to the lithium salt and the doping agent A is consistent with theory, and causing the performance and indicators of the sintered material to be consistent. Then primary sintering according to the first temperature curve, cooling, and pulverizing are performed on the mixture B under the oxygen atmosphere, so as to obtain the high-nickel cobalt-free positive electrode material C, and during this process, the high-nickel cobalt-free positive electrode material LiₓNi_{y}Mn_{1-y}A_{z}O₂ is generated after the mixture B is calcined at a high temperature under the oxygen atmosphere. And then the high-nickel cobalt-free positive electrode material C is washed with water, solid-liquid separation is performed to obtain the filter cake, residual lithium on the surface of the high-nickel cobalt-free positive electrode material is effectively removed through water washing, so as to reduce the impact of the residual lithium on the material, thereby improving conductivity, accelerating lithium ion migration, and improving the safety performance of a battery.

The La source and the Co source are added to the filter cake, then the mixtures are put into the drying device together for rotation drying, the dried materials are put into a mixer for uniform mixing after drying, so as to obtain the high-nickel cobalt-free positive electrode material D. During this process, and the filter cake, the La source, and the Co source are well mixed, ensuring that ratio of any portion of the filter cake, the La source, and the Co source is consistent with theory, and causing the performance and indicators of the sintered material to be consistent. Finally, secondary sintering according to the second temperature curve, cooling, and sieving are performed on the high-nickel cobalt-free positive electrode material D under the oxygen atmosphere, so as to obtain the high-nickel cobalt-free positive electrode material of which chemical formula is LiₓNi_{y}Mn_{1-y}A_{z}O₂ and having the surface coated with LaₐLi_{b}CoO₃ perovskite. Since energy generated during mixing using high-speed rotation before secondary sintering causes chemical reactions between solid matter particles, the perovskite may be obtained without high-temperature calcination, during this process, secondary sintering is performed on the high-nickel cobalt-free positive electrode material D under the oxygen atmosphere to in situ form the perovskite coating layer on the surface of the material, so as to reduce the residual alkali in the high-nickel cobalt-free positive electrode material, and high discharging capacity, good rate performance, and good battery cycling performance are achieved.

In the present disclosure, the method of performing water washing and solid-liquid separation on the high-nickel cobalt-free positive electrode material matrix and then adding an additive to the filter cake is used to coat the La source and Co source on the surface of the material, and then the perovskite coating layer is formed in situ on the surface of the material through sintering, such that primary reduction of residual alkali is realized through water washing, and Li(Li₂CO₃) required for the synthesis of the perovskite by the positive electrode material is a surface lithium residue of the positive electrode material, which may not only consume lithium in the material to realize secondary reduction of surface residual alkali, but also form the perovskite coating layer with the chemical formula being LaₐLi_{b}CoO₃ (LLCO). Furthermore, because of formation of the perovskite coating layer, the positive electrode material has high lithium ion conductivity, good capacity retention capability and rate performance, and has high reversibility. The high-nickel cobalt-free positive electrode material prepared using the method is low in residual alkali, high in discharging capacity, good in rate performance, and good in battery cycling performance.

In a preferred embodiment, the lithium salt in S1 is LiOH. Under the above condition, molten lithium hydroxide during sintering may be mixed with the high-nickel precursor more uniformly and fully, thereby reducing surface lithium residues, and increasing the discharging specific capacity of raw materials.

In order to further reduce the residual alkali, reduce the deterioration of cycling performance and capacity of the positive electrode material due to a high water to material ratio and washing time, in a preferred embodiment, a mass ratio of the water to the high-nickel cobalt-free positive electrode material C during washing in S3 is 1-3:1, a washing time is 10-30 min, then solid-liquid separation is performed for 15-30 min after the mixture enters a solid-liquid separation device.

In a preferred embodiment, the La source in S4 contains at least one of La₂O₃, La(NO₃)₃, or La₂(CO₃)·8H₂O, and the Co source contains at least one of Co₂O₃, Co(OH)₂, Co(NO₃)₂, CoCO₃, or Co₃O₄; and a particle size range of the La source is 10-400 nm, and a particle size range of the Co source is 20-300 nm. The above appropriate particle size range can cause the La source and the Co source to be effectively mixed in the filter cake, so as to obtain the uniformly-mixed high-nickel cobalt-free positive electrode material D.

In order to further dry the filter cake and reduce damages to the shape and structure of the positive electrode material, in a preferred embodiment, a drying temperature in S4 is 100-200 °C, and a drying time is 0.5-7 h.

In a preferred embodiment, the mixing of the high-nickel cobalt-free precursor with the lithium salt and the doping agent A in S1 uses a high mixing machine or a planetary ball mill, a mixing time of the high mixing machine is 10-30 min, and a mixing time of the planetary ball mill is 3-5 h. Under the above conditions, the high-nickel cobalt-free precursor can be mixed with the lithium salt and the doping agent A more uniformly, so as to further ensure that the ratio of any portion of the high-nickel cobalt-free precursor to the lithium salt and the doping agent A is consistent with theory, thereby causing the performance and indicators of the sintered material to be consistent.

For the purpose of causing the performance and costs to be optimal, in a preferred embodiment, the molar ratio of the Li in the lithium salt to the Ni_{y}Mn_{1-y}(OH)₂ is (1.03-1.08):1.

In a preferred embodiment, the first temperature curve in S2 is that the temperature is heated to 800-820 °C at the heating rate of 3-5 °C/min under the oxygen atmosphere, and after the required temperature reaches, the temperature is held for 10-20 h. Under the above conditions, the high-nickel cobalt-free precursor can react with the lithium salt and the doping agent A at an optimal temperature, so as to achieve better performance and indicators of the material. Since a degree of crystallinity of the raw material is increased after a calcination temperature is higher than 820 °C, crystal particles increased, and a specific surface area decreases, not facilitating detachment and embedding of lithium ions during charging and discharging. In addition, mixed discharging of lithium and nickel occurs due to a too high sintering temperature, not facilitating calcination of a high-nickel layered raw material with a required stoichiometric ratio, thus causing reduction in the diffusion capacity of the lithium ions and reduction in specific capacity.

For the purpose of causing a reaction temperature and performance to be optimal, in a preferred embodiment, the second temperature curve in S5 is that the temperature is heated to 300-350 °C at the heating rate of 3-6 °C/min under the oxygen atmosphere, and after the required temperature reaches, the temperature is held for 6-15 h.

Another typical embodiment of the present disclosure further provides a high-nickel cobalt-free positive electrode material, which is prepared by using the method for preparing a high-nickel cobalt-free positive electrode material with double reduction of residual alkali described above in the present disclosure. A chemical formula is LiₓNi_{y}Mn_{1-y}A_{z}O₂ and LaₐLi_{b}CoO₃ perovskite is coated on a surface, where 0.75<y≤0.95, 0.95≤x≤1.15, 0.001<z≤0.005, 0.5≤a≤0.9, and 0.3≤b≤1.5. Because of the use of the preparation method of the present disclosure, the high-nickel cobalt-free positive electrode material has significantly-reduced residual alkali and significantly-increased discharging capacity, rate performance and battery cycling performance.

The technical solutions in the examples of the present disclosure will be clearly and completely described below. It is apparent that the described examples are only part of the embodiments of the present disclosure, not all the embodiments. All other examples obtained by those of ordinary skill in the art on the basis of the examples in the present disclosure without creative work all fall within the scope of protection of the present disclosure.

### Example 1

A method for preparing a high-nickel cobalt-free positive electrode material with double reduction of residual alkali included the following steps.

A high-nickel cobalt-free precursor (Ni_{0.90}Mn_{0.10}(OH)₂), a lithium salt, and an additive A were weighed according to a calculated amount, the lithium salt was LiOH, the additive A was ZrO₂, a molar ratio of the LiOH to the Ni_{0.90}Mn_{0.10}(OH)₂ was 1.03:1, the ZrO₂ accounted for 0.1 mol% of the total amount of the LiOH and the Ni_{0.90}Mn_{0.10}(OH)₂, the mixture was added to a high mixing machine for mixing, and a mixing time was 15 min. First sintering was performed on the uniformly-mixed materials under an oxygen atmosphere condition, and a temperature was heated to 800 °C at a heating rate of 3 °C/min, and was held for 10 h after reaching a required temperature. The materials after primary sintering were cooled, broken, and pulverized to obtain a pulverized material, washing was performed according to a mass ratio of pure water to the pulverized material being 1:1, a washing time was 15 min, and then solid-liquid separation was performed in a centrifuge for 20 min. La₂O₃ with a particle size range being 10-400 nm and Co₂O₃ with a particle size range being 20-300 nm were added to a filter cake, the La₂O₃ accounted for 1 wt% of the filter cake, a molar ratio of the La₂O₃ to the Co₂O₃ was 0.5:1, then the mixtures were put in a cone-shaped spiral belt vacuum mixing dryer for a drying process, a drying temperature was 150 °C, a drying time was 3 h, and the device rotated. After drying, the dried material was put into the high mixing machine to mix for 15 min, so as to achieve uniform mixing, then the dried material was sintered under an oxygen atmosphere, and a temperature was heated from room temperature to 300 °C at a heating rate of 3 °C/min, and was held for 6h; and finally, the temperature was naturally cooled to room temperature, and an Example 1 sample having a coating layer being La_{0.5}Li_{1.5}CoO₃ was obtained after sieving.

### Example 2

A method for preparing a high-nickel cobalt-free positive electrode material with double reduction of residual alkali included the following steps.

A high-nickel cobalt-free precursor (Ni_{0.90}Mn_{0.10}(OH)₂), a lithium salt, and an additive A were weighed according to a calculated amount, the lithium salt was LiOH, the additive A was ZrO₂, a molar ratio of the LiOH to the Ni_{0.90}Mn_{0.10}(OH)₂ was 1.05:1, the ZrO₂ accounted for 0.3 mol% of the total amount of the LiOH and the Ni_{0.90}Mn_{0.10}(OH)₂, the mixture was added to a high mixing machine for mixing, and a mixing time was 20 min. First sintering was performed on the uniformly-mixed materials under an oxygen atmosphere condition, and a temperature was heated to 820 °C at a heating rate of 5 °C/min, and was held for 10 h after reaching a required temperature. The materials after primary sintering were cooled, broken, and pulverized to obtain a pulverized material, washing was performed according to a mass ratio of pure water to the pulverized material being 1.5:1, a washing time was 20 min, and then solid-liquid separation was performed in a centrifuge for 20 min. La₂O₃ with a particle size range being 10-400 nm and Co₂O₃ with a particle size range being 20-300 nm were added to a filter cake, the La₂O₃ accounted for 2 wt% of the filter cake, a molar ratio of the La₂O₃ to the Co₂O₃ was 0.7:1, then the mixtures were put in a cone-shaped spiral belt vacuum mixing dryer for a drying process, a drying temperature was 150 °C, a drying time was 3 h, and the device rotated. After drying, the dried material was put into the high mixing machine to mix for 15 min, so as to achieve uniform mixing, then the dried material was sintered under an oxygen atmosphere, and a temperature was heated from room temperature to 350 °C at a heating rate of 6 °C/min, and was held for 6h; and finally, the temperature was naturally cooled to room temperature, and an Example 2 sample having a coating layer being La_{0.7}Li_{0.9}CoO₃ was obtained after sieving.

### Example 3

A method for preparing a high-nickel cobalt-free positive electrode material with double reduction of residual alkali included the following steps.

A high-nickel cobalt-free precursor (Ni_{0.90}Mn_{0.10}(OH)₂), a lithium salt, and an additive A were weighed according to a calculated amount, the lithium salt was LiOH, the additive A was ZrO₂, a molar ratio of the LiOH to the Ni_{0.90}Mn_{0.10}(OH)₂ was 1.08:1, the ZrO₂ accounted for 0.5 mol% of the total amount of the LiOH and the Ni_{0.90}Mn_{0.10}(OH)₂, the mixture was added to a high mixing machine for mixing, and a mixing time was 20 min. First sintering was performed on the uniformly-mixed materials under an oxygen atmosphere condition, and a temperature was heated to 800 °C at a heating rate of 3 °C/min, and was held for 10 h after reaching a required temperature. The materials after primary sintering were cooled, broken, and pulverized to obtain a pulverized material, washing was performed according to a mass ratio of pure water to the pulverized material being 1:1, a washing time was 15 min, and then solid-liquid separation was performed in a centrifuge for 20 min. La₂O₃ with a particle size range being 10-400 nm and Co₂O₃ with a particle size range being 20-300 nm were added to a filter cake, the La₂O₃ accounted for 3 wt% of the filter cake, a molar ratio of the La₂O₃ to the Co₂O₃ was 0.9:1, then the mixtures were put in a cone-shaped spiral belt vacuum mixing dryer for a drying process, a drying temperature was 150 °C, a drying time was 3 h, and the device rotated. After drying, the dried material was put into the high mixing machine to mix for 15 min, so as to achieve uniform mixing, then the dried material was sintered under an oxygen atmosphere, and a temperature was heated from room temperature to 300 °C at a heating rate of 3 °C/min, and was held for 6h; and finally, the temperature was naturally cooled to room temperature, and an Example 3 sample having a coating layer being La_{0.9}Li_{0.3}CoO₃ was obtained after sieving.

### Example 4

A method for preparing a high-nickel cobalt-free positive electrode material with double reduction of residual alkali included the following steps.

At S1, a high-nickel cobalt-free precursor (Ni_{0.90}Mn_{0.10}(OH)₂), a lithium salt, and an additive A were weighed according to a calculated amount, the lithium salt was LiOH, the additive A was ZrO₂, a molar ratio of the LiOH to the Ni_{0.90}Mn_{0.10}(OH)₂ was 0.95:1, the ZrO₂ accounted for 0.1 mol% of the total amount of the LiOH and the Ni_{0.90}Mn_{0.10}(OH)₂, the mixture was added to a high mixing machine for mixing, and a mixing time was 30 min.

At S2, first sintering was performed on the uniformly-mixed materials under an oxygen atmosphere condition, and a temperature was heated to 800 °C at a heating rate of 3 °C/min, and was held for 20 h after reaching a required temperature.

At S3, the materials after primary sintering were cooled, broken, and pulverized to obtain a pulverized material, washing was performed according to a mass ratio of pure water to the pulverized material being 1:1, a washing time was 10 min, and then solid-liquid separation was performed in a centrifuge for 15 min.

At S4, La₂O₃ with a particle size range being 10-400 nm and Co₂O₃ with a particle size range being 20-300 nm were added to a filter cake, the La₂O₃ accounted for 0.5 wt% of the filter cake, a molar ratio of the La₂O₃ to the Co₂O₃ was 0.5:1, then the mixtures were put in a cone-shaped spiral belt vacuum mixing dryer for a drying process, a drying temperature was 100 °C, a drying time was 7 h, and the device rotated; and after drying, the dried material was put into the high mixing machine to mix for 15 min, so as to achieve uniform mixing.

At S5, the dried material was sintered under an oxygen atmosphere, and a temperature was heated from room temperature to 300 °C at a heating rate of 3 °C/min, and was held for 15h; and finally, the temperature was naturally cooled to room temperature, and an Example 4 sample was obtained after sieving.

### Example 5

A method for preparing a high-nickel cobalt-free positive electrode material with double reduction of residual alkali included the following steps.

At S1, a high-nickel cobalt-free precursor (Ni_{0.90}Mn_{0.10}(OH)₂), a lithium salt, and an additive A were weighed according to a calculated amount, the lithium salt was LiOH, the additive A was ZrO₂, a molar ratio of the LiOH to the Ni_{0.90}Mn_{0.10}(OH)₂ was 1.15:1, the ZrO₂ accounted for 0.5 mol% of the total amount of the LiOH and the Ni_{0.90}Mn_{0.10}(OH)₂, the mixture was added to a planetary ball mill for mixing, and a mixing time was 5h.

At S2, first sintering was performed on the uniformly-mixed materials under an oxygen atmosphere condition, and a temperature was heated to 850 °C at a heating rate of 10 °C/min, and was held for 3 h after reaching a required temperature.

At S3, the materials after primary sintering were cooled, broken, and pulverized to obtain a pulverized material, washing was performed according to a mass ratio of pure water to the pulverized material being 3:1, a washing time was 30 min, and then solid-liquid separation was performed in a centrifuge for 30 min.

At S4, La₂O₃ with a particle size range being 10-400 nm and Co₂O₃ with a particle size range being 20-300 nm were added to a filter cake, the La₂O₃ accounted for 3 wt% of the filter cake, a molar ratio of the La₂O₃ to the Co₂O₃ was 0.9:1, then the mixtures were put in a cone-shaped spiral belt vacuum mixing dryer for a drying process, a drying temperature was 200 °C, a drying time was 0.5 h, and the device rotated; and after drying, the dried material was put into the high mixing machine to mix for 15 min, so as to achieve uniform mixing.

At S5, the dried material was sintered under an oxygen atmosphere, and a temperature was heated from room temperature to 450 °C at a heating rate of 7 °C/min, and was held for 3h; and finally, the temperature was naturally cooled to room temperature, and an Example 5 sample was obtained after sieving.

### Comparative Example 1

A method for preparing a high-nickel cobalt-free positive electrode material included the following steps.

A high-nickel cobalt-free precursor (Ni_{0.90}Mn_{0.10}(OH)₂), a lithium salt, and an additive A were weighed according to a calculated amount, the lithium salt was LiOH, the additive A was ZrO₂, a molar ratio of the LiOH to the Ni_{0.90}Mn_{0.10}(OH)₂ was 1.03:1, the ZrO₂ accounted for 0.1 mol% of the total amount of the LiOH and the Ni_{0.90}Mn_{0.10}(OH)₂, the mixture was added to a high mixing machine for mixing, and a mixing time was 15 min. First sintering was performed on the uniformly-mixed materials under an oxygen atmosphere condition, and a temperature was heated to 800 °C at a heating rate of 3 °C/min, and was held for 10 h after reaching a required temperature. The materials after primary sintering were cooled, broken, and pulverized to obtain a pulverized material, washing was performed according to a mass ratio of pure water to the pulverized material being 1:1, a washing time was 15 min, and then solid-liquid separation was performed in a centrifuge for 20 min. A filter cake was put in a cone-shaped spiral belt vacuum mixing dryer for a drying process, a drying temperature was 150 °C, a drying time was 3 h, and the device rotated. A WO₃ additive was added to the dried material, and the WO₃ accounted for 1 wt% of the dried material; the mixture was put into the high mixing machine to mix for 15 min, so as to achieve uniform mixing, then the coating material was sintered under an oxygen atmosphere, and a temperature was heated from room temperature to 300 °C at a heating rate of 3 °C/min, and was held for 6h; and finally, the temperature was naturally cooled to room temperature, and a Comparative Example 1 sample was obtained after sieving.

### Comparative Example 2

A method for preparing a high-nickel cobalt-free positive electrode material included the following steps.

A high-nickel cobalt-free precursor (Ni_{0.90}Mn_{0.10}(OH)₂), a lithium salt, and an additive A were weighed according to a calculated amount, the lithium salt was LiOH, the additive A was ZrO₂, a molar ratio of the LiOH to the Ni_{0.90}Mn_{0.10}(OH)₂ was 1.03:1, the ZrO₂ accounted for 0.1 mol% of the total amount of the LiOH and the Ni_{0.90}Mn_{0.10}(OH)₂, the mixture was added to a high mixing machine for mixing, and a mixing time was 15 min. First sintering was performed on the uniformly-mixed materials under an oxygen atmosphere condition, and a temperature was heated to 800 °C at a heating rate of 3 °C/min, and was held for 10 h after reaching a required temperature. The materials after primary sintering were cooled, broken, and pulverized to obtain a pulverized material, washing was performed according to a mass ratio of pure water to the pulverized material being 1:1, a washing time was 15 min, and then solid-liquid separation was performed in a centrifuge for 20 min. A filter cake was put in a cone-shaped spiral belt vacuum mixing dryer for a drying process, a drying temperature was 150 °C, a drying time was 3 h, and the device rotated. La₂O₃ and Co₂O₃ were added to the dried material, and the La₂O₃ accounted for 1 wt% of the dried material; a molar ratio of the La₂O₃ and the Co₂O₃ was 0.9:1, the mixture was put into the high mixing machine to mix for 15 min, so as to achieve uniform mixing, then the coating material was sintered under an oxygen atmosphere, and a temperature was heated from room temperature to 300 °C at a heating rate of 3 °C/min, and was held for 6h; and finally, the temperature was naturally cooled to room temperature, and a Comparative Example 2 sample was obtained after sieving.

### Comparative Example 3

A method for preparing a high-nickel cobalt-free positive electrode material included the following steps.

A high-nickel cobalt-free precursor (Ni_{0.90}Mn_{0.10}(OH)₂), a lithium salt, and an additive A were weighed according to a calculated amount, the lithium salt was LiOH, the additive A was ZrO₂, a molar ratio of the LiOH to the Ni_{0.90}Mn_{0.10}(OH)₂ was 1.03:1, the ZrO₂ accounted for 0.1 mol% of the total amount of the LiOH and the Ni_{0.90}Mn_{0.10}(OH)₂, the mixture was added to a high mixing machine for mixing, and a mixing time was 15 min. First sintering was performed on the uniformly-mixed materials under an oxygen atmosphere condition, and a temperature was heated to 800 °C at a heating rate of 3 °C/min, and was held for 10 h after reaching a required temperature. The materials after primary sintering were cooled, broken, and pulverized to obtain a pulverized material, washing was performed according to a mass ratio of pure water to the pulverized material being 1:1, a washing time was 15 min, and then solid-liquid separation was performed in a centrifuge for 20 min. A WO₃ additive was added to a filter cake, and the WO₃ accounted for 1 wt% of the filter cake; and then the mixtures were put in a cone-shaped spiral belt vacuum mixing dryer for a drying process, a drying temperature was 150 °C, a drying time was 3 h, and the device rotated. After drying, the dried material was put into the high mixing machine to mix for 15 min, so as to achieve uniform mixing, then the dried material was sintered under an oxygen atmosphere, and a temperature was heated from room temperature to 300 °C at a heating rate of 3 °C/min, and was held for 6h; and finally, the temperature was naturally cooled to room temperature, and a Comparative Example 3 sample was obtained after sieving.

### Comparative Example 4

A method for preparing a high-nickel cobalt-free positive electrode material included the following steps.

At S1, a high-nickel cobalt-free precursor (Ni_{0.90}Mn_{0.10}(OH)₂), a lithium salt, and an additive A were weighed according to a calculated amount, the lithium salt was LiOH, the additive A was ZrO₂, a molar ratio of the LiOH to the Ni_{0.90}Mn_{0.10}(OH)₂ was 0.9:1, the ZrO₂ accounted for 0.05 mol% of the total amount of the LiOH and the Ni_{0.90}Mn_{0.10}(OH)₂, the mixture was added to a high mixing machine for mixing, and a mixing time was 5 min.

At S2, first sintering was performed on the uniformly-mixed materials under an oxygen atmosphere condition, and a temperature was heated to 750 °C at a heating rate of 2 °C/min, and was held for 22 h after reaching a required temperature.

At S3, the materials after primary sintering were cooled, broken, and pulverized to obtain a pulverized material, washing was performed according to a mass ratio of pure water to the pulverized material being 0.5:1, a washing time was 5 min, and then solid-liquid separation was performed in a centrifuge for 10 min.

At S4, La₂O₃ with a particle size range being 10-400 nm and Co₂O₃ with a particle size range being 20-300 nm were added to a filter cake, the La₂O₃ accounted for 0.3 wt% of the filter cake, a molar ratio of the La₂O₃ to the Co₂O₃ was 0.4:1, then the mixtures were put in a cone-shaped spiral belt vacuum mixing dryer for a drying process, a drying temperature was 80 °C, a drying time was 8 h, and the device rotated; and after drying, the dried material was put into the high mixing machine to mix for 15 min, so as to achieve uniform mixing.

At S5, the dried material was sintered under an oxygen atmosphere, and a temperature was heated from room temperature to 250 °C at a heating rate of 2 °C/min, and was held for 18h; and finally, the temperature was naturally cooled to room temperature, and a Comparative Example 4 sample was obtained after sieving.

### Comparative Example 5

A method for preparing a high-nickel cobalt-free positive electrode material included the following steps.

At S1, a high-nickel cobalt-free precursor (Ni_{0.90}Mn_{0.10}(OH)₂), a lithium salt, and an additive A were weighed according to a calculated amount, the lithium salt was LiOH, the additive A was ZrO₂, a molar ratio of the LiOH to the Ni_{0.90}Mn_{0.10}(OH)₂ was 1.2:1, the ZrO₂ accounted for 0.6 mol% of the total amount of the LiOH and the Ni_{0.90}Mn_{0.10}(OH)₂, the mixture was added to a high mixing machine for mixing, and a mixing time was 35 min.

At S2, first sintering was performed on the uniformly-mixed materials under an oxygen atmosphere condition, and a temperature was heated to 900 °C at a heating rate of 12 °C/min, and was held for 2 h after reaching a required temperature.

At S3, the materials after primary sintering were cooled, broken, and pulverized to obtain a pulverized material, washing was performed according to a mass ratio of pure water to the pulverized material being 4:1, a washing time was 35 min, and then solid-liquid separation was performed in a centrifuge for 35 min.

At S4, La₂O₃ with a particle size range being 10-400 nm and Co₂O₃ with a particle size range being 20-300 nm were added to a filter cake, the La₂O₃ accounted for 4 wt% of the filter cake, a molar ratio of the La₂O₃ to the Co₂O₃ was 1:1, then the mixtures were put in a cone-shaped spiral belt vacuum mixing dryer for a drying process, a drying temperature was 220 °C, a drying time was 0.2 h, and the device rotated; and after drying, the dried material was put into the high mixing machine to mix for 15 min, so as to achieve uniform mixing.

At S5, the dried material was sintered under an oxygen atmosphere, and a temperature was heated from room temperature to 500 °C at a heating rate of 8 °C/min, and was held for 2h; and finally, the temperature was naturally cooled to room temperature, and a Comparative Example 5 sample was obtained after sieving.

Physical and chemical indicators and electrical performance evaluation were performed on the positive electrode materials obtained in the above examples and comparative examples under the same conditions, respectively.
1. The content of surface residual alkali of the positive electrode materials obtained in the examples and comparative examples was tested.

A test process was as follows: certain amount of a sample was weighed, certain amount of deionized water was added, filtration was performed after a period of time for stirring, a hydrochloric acid standard titration solution was used for direct titration, until the color of an indicator changed, indicating that the acid and base had been completely neutralized, the volume of an acid solution used for titration was recorded, and the content of the residual alkali in the sample was calculated according to a chemical equation of an acid-base reaction.

Test results for the residual alkali content were shown in Table 1, and according to data, it might be learned that, the surface residual alkali of the example samples was significantly reduced compared to that of the comparative example samples. Furthermore, through data analysis, it might be learned that, the residual alkali in the Comparative Example 1 sample in which other additives were added to the dried material was the highest, the residual alkali in the Comparative Example 2 and 3 samples in which other additives were added to the filter cake and the La source and the Co source were added to the dried material was slightly reduced compared to the Comparative Example 1 sample, but the effect was not significant, and the residual alkali of the above examples of the present disclosure was significantly reduced. Therefore, the method for reducing the content of the surface residual alkali in the above examples of the present disclosure was significant in effect. This indicated that for the positive electrode material obtained by using the method for reducing the residual alkali through double modification in the above examples of the present disclosure, primary reduction of the residual alkali was realized during washing, and in the subsequent process, the residual alkali on the surface of the material was consumed due to the formation of the LLCO coating layer by adding the additive to the filter cake, which was the secondary reduction of the residual alkali.

**Table 1**

| Item | Li₂CO₃/% | LiOH/% | Li/% |
|---|---|---|---|
| Example 1 sample | 0.1258 | 0.1283 | 0.0608 |
| Example 2 sample | 0.1054 | 0.0967 | 0.0478 |
| Example 3 sample | 0.1599 | 0.1814 | 0.0826 |
| Example 4 sample | 0.1551 | 0.2379 | 0.0981 |
| Example 5 sample | 0.1662 | 0.2515 | 0.1070 |
| Comparative Example 1 sample | 0.2822 | 0.2935 | 0.1381 |
| Comparative Example 2 sample | 0.2035 | 0.2868 | 0.1214 |
| Comparative Example 3 sample | 0.2416 | 0.2953 | 0.1310 |
| Comparative Example 4 sample | 0.1899 | 0.2641 | 0.1122 |
| Comparative Example 5 sample | 0.2153 | 0.2559 | 0.1146 |

2. A button-type half battery electrical performance test was performed on the positive electrode materials obtained in the examples and comparative examples.

A test process was as follows: in a glove box filled with argon, a button-type battery was assembled by using a lithium metal sheet as a negative electrode. A positive electrode plate consisted of 92 wt% of an active substance, 4 wt% of a Super-P (superconducting carbon black) conductive agent, and 4 wt% of a PVDF (Polyvinylidene Fluoride) binder. Test process steps for cyclic testing of charging and discharging: a voltage range was 3.0-4.4 V, and three circles were cycled under conditions of a cyclic charging and discharging rate being 0.2C, 0.5C, 1C, 2C, 3C, and 0.2C, respectively; and then 50 times were cycled under the charging and discharging rate of 1 C.

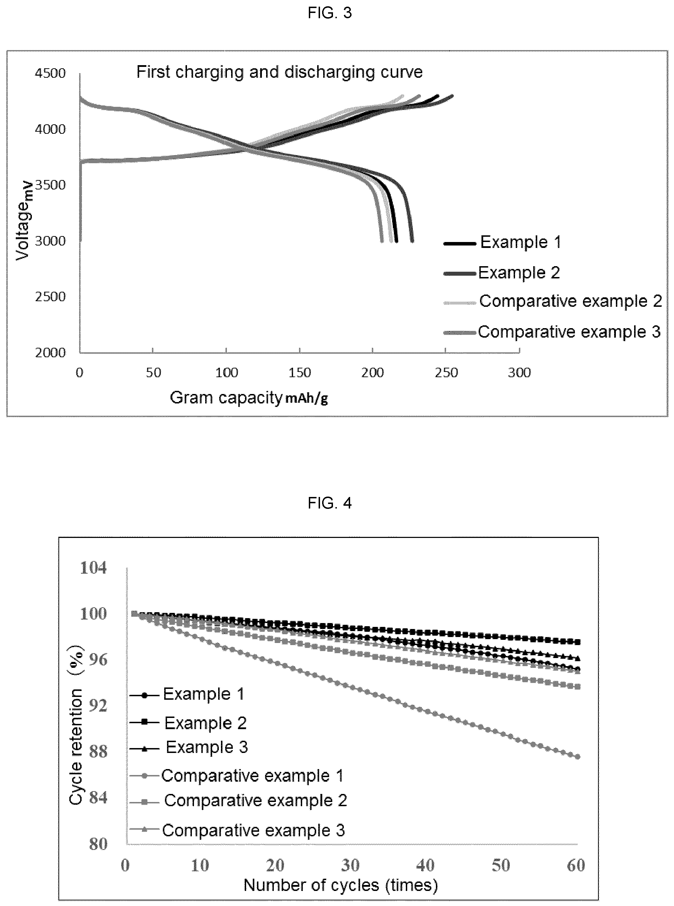

A comparison diagram of first charging and discharging curves of a button-type half battery prepared by the positive electrode material obtained in Examples 1 and 2 and Comparative Examples 2 and 3 was shown in FIG. 3. From FIG. 3, it might be learned that, in the first charging specific capacity of the corresponding button-type half battery, the Example 2 sample > Example 1 sample > Comparative Example 3 sample > Comparative Example 2 sample; in the first discharging specific capacity of the corresponding button-type half battery, the Example 2 sample > Example 1 sample > Comparative Example 2 sample > Comparative Example 3 sample; and in the first efficiency of the corresponding button-type half battery, the Example 2 sample > Example 1 sample > Comparative Example 2 sample > Comparative Example 3 sample. Through comparison, it might be learned that, the first charging specific capacity, first discharging specific capacity, and first efficiency of the button-type half battery prepared by the positive electrode material obtained by using the method for reducing the residual alkali through double modification in the examples of the present disclosure were all improved compared those in the comparative examples.

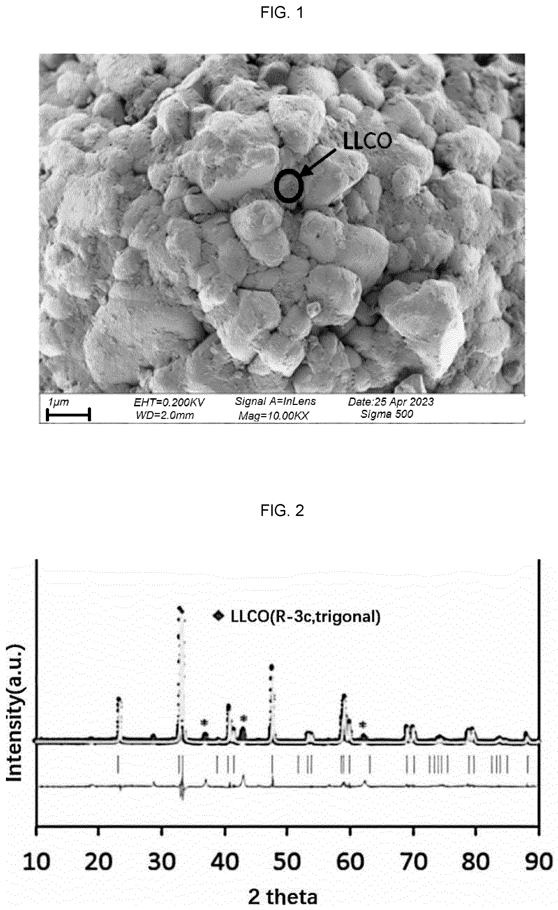

A comparison diagram of capacity retention of corresponding button-type half batteries prepared by the positive electrode material obtained in Examples 1 to 3 and Comparative Examples 1 to 3 after 50 charging and discharging cycles under the same test conditions was shown in FIG. 4. From FIG. 4, it might be learned that, the capacity retention of the Example 1, 2, and 3 samples were superior to that of Comparative Example 1, 2, and 3 samples; and in reference to the FESEM diagram of FIG. 1, it might be seen that, the surface of the Example 2 sample material in FIG. 1 was uniformly coated with a coating layer, the dispersivity was better after the surface was coated, and the coating was uniform without agglomeration. Furthermore, in reference to the XRD pattern generated in FIG. 2 and an EDS test for the Example 2 sample, results were shown in Table 2. It might be learned that there were La, Li, and Co in the coating layer measured, and it might seen that a perovskite coating layer was generated. In reference to the above electrical performance test results, it might be learned that the LLCO coating layer formed in situ on the surface after the positive electrode material in the examples of the present disclosure was coated with the perovskite might effectively improve the ion conductivity of the positive electrode material, improve lithium ion embedding/detachment efficiency, and might effectively inhibit a direct contact between electrolyte and the positive electrode material, so as to reduce the dissolving of metal ions, thereby improving the discharging capacity, charging and discharging efficiency, and cycling performance of the material. It indicated that after the perovskite coating layer was formed on the positive electrode material obtained by using the method for reducing the residual alkali through double modification in the examples of the present disclosure, because of the high lithium ion conductivity of the LLCO material, the cyclicity of the positive electrode material was significantly improved relative to the comparative examples.

**Table 2**

| Spectrogram of total number of distribution diagrams | |
|---|---|
| Element | wt% |
| La | 60.17 |
| Li | 3.84 |
| Co | 35.99 |
| Total | 100.00 |

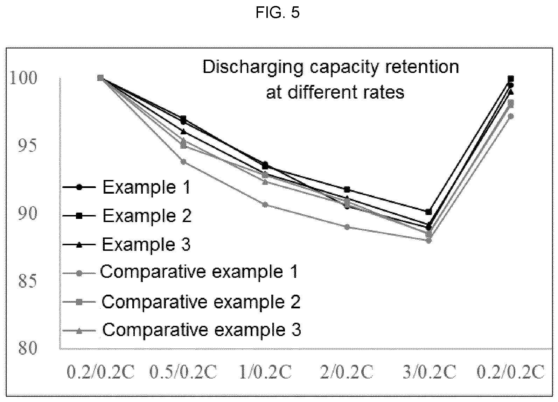

A comparison diagram of capacity retention of corresponding button-type half batteries prepared by the positive electrode material obtained in Examples 1 to 3 and Comparative Examples 1 to 3 under different rates was shown in FIG. 5. From FIG. 5, it might be learned that, compared with the positive electrode material having the LLCO coating layer prepared in Example 2, the discharging capacity and capacity retention at different rates of the positive electrode material prepared in Comparative Example 2 were significantly lower, especially at a high rate, and the rate performance of the positive electrode material prepared in Example 2 was significantly more excellent, this was because the addition of the La source and the Co source in the filter cake was more conductive to the achievement of capacity and rate performance than the addition of the La source and the Co source in the dried material. Furthermore, compared with the positive electrode material having the LLCO coating layer prepared in Example 2, the discharging capacity and capacity retention at different rates of the positive electrode material prepared in Comparative Example 3 were significantly lower, especially at a high rate, and the rate performance of the positive electrode material prepared in Example 2 was significantly more excellent, this was because the LLCO coating layer generated on the positive electrode material coated with the La source and the Co source was a fast ion conductor, which reduced the resistance of the positive electrode material, facilitating the achievement of capacity and rate performance.

Through the above, it might be learned that, compared with the comparative examples, in the examples of the present disclosure, the surface of the material was coated with the La source and the Co source, and then the perovskite coating layer was formed in situ on the surface of the material through sintering, such that primary reduction of the residual alkali was realized through water washing, and the perovskite coating layer was generated through the reaction with residual lithium in the material, causing the content of residual lithium on the surface of the high-nickel material to reduce, thereby realizing secondary reduction of the residual alkali. Because of formation of the perovskite coating layer, the positive electrode material has high lithium ion conductivity, good capacity retention capability and rate performance, and has high reversibility. The prepared high-nickel cobalt-free positive electrode material is low in residual alkali, high in discharging capacity, good in rate performance, and good in battery cycling performance. In addition, it might be seen that, when all process parameters were all within a preferred range of the present disclosure, the comprehensive performance of the material was optimal.

The above are only the preferred embodiments of the present disclosure and are not intended to limit the present disclosure. For those skilled in the art, the present disclosure may have various modifications and variations. Any modifications, equivalent replacements, improvements and the like made within the spirit and principle of the present disclosure shall fall within the scope of protection of the present disclosure.

## Claims

1. A method for preparing a high-nickel cobalt-free positive electrode material with double reduction of residual alkali, comprising the following steps:
S1, fulling mixing a high-nickel cobalt-free precursor with a lithium salt and a doping agent A to obtain a mixture B, wherein a general formula of the high-nickel cobalt-free precursor is Ni_{y}Mn_{1-y}(OH)₂, and 0.75<y≤0.95; a molar ratio of Li in the lithium salt to Ni_{y}Mn_{1-y}(OH)₂ is (0.95-1.15):1, and the doping agent A accounts for 0.1-0.5 mol% of the total amount of the lithium salt and the Ni_{y}Mn_{1-y}(OH)₂; and the doping agent A is a compound containing at least one of Al, Zr, W, Mo, or Nb;
S2, performing primary sintering according to a first temperature curve, cooling, and pulverizing on the mixture B under an oxygen atmosphere, so as to obtain a high-nickel cobalt-free positive electrode material C, wherein the first temperature curve is that a temperature is heated to 800-850 °C at a heating rate of 3-10 °C/min under the oxygen atmosphere, and after a required temperature reaches, the temperature is held for 3-20 h;
S3, washing the high-nickel cobalt-free positive electrode material C with water, and then performing solid-liquid separation to obtain a filter cake;
S4, adding a La source and a Co source to the filter cake, then putting the mixtures into a drying device together for rotation drying, and putting the dried materials into a mixer for uniform mixing after drying, so as to obtain a high-nickel cobalt-free positive electrode material D, wherein the La source accounts for 0.5-3 wt% of the filter cake, and a molar ratio of La in the La source to Co in the Co source is 0.5-0.9:1; and
S5, performing secondary sintering according to a second temperature curve, cooling, and sieving on the high-nickel cobalt-free positive electrode material D under the oxygen atmosphere, so as to obtain a high-nickel cobalt-free positive electrode material of which chemical formula is LiₓNi_{y}Mn_{1-y}A_{z}O₂ and having a surface coated with LaₐLi_{b}CoO₃ perovskite, wherein 0.75<y≤0.95, 0.95≤x≤1.15, and 0.001<z≤0.005; and the second temperature curve is that a temperature is heated to 300-450 °C at a heating rate of 3-7 °C/min under the oxygen atmosphere, and after a required temperature reaches, the temperature is held for 3-15 h.

2. The method for preparing a high-nickel cobalt-free positive electrode material with double reduction of residual alkali according to claim 1, wherein the lithium salt in S1 is LiOH.

3. The method for preparing a high-nickel cobalt-free positive electrode material with double reduction of residual alkali according to claim 1 or 2, wherein a mass ratio of the water to the high-nickel cobalt-free positive electrode material C during washing in S3 is 1-3:1, a washing time is 10-30 min, then solid-liquid separation is performed for 15-30 min after the mixture enters a solid-liquid separation device.

4. The method for preparing a high-nickel cobalt-free positive electrode material with double reduction of residual alkali according to any one of claims 1 to 3, wherein the La source in S4 contains at least one of La₂O₃, La(NO₃)₃, or La₂(CO₃)·8H₂O, and the Co source contains at least one of Co₂O₃, Co(OH)₂, Co(NO₃)₂, CoCO₃, or Co₃O₄; and a particle size range of the La source is 10-400 nm, and a particle size range of the Co source is 20-300 nm.

5. The method for preparing a high-nickel cobalt-free positive electrode material with double reduction of residual alkali according to any one of claims 1 to 4, wherein a drying temperature in S4 is 100-200 °C, and a drying time is 0.5-7 h.

6. The method for preparing a high-nickel cobalt-free positive electrode material with double reduction of residual alkali according to any one of claims 1 to 5, wherein the mixing of the high-nickel cobalt-free precursor with the lithium salt and the doping agent A in S1 uses a high mixing machine or a planetary ball mill, a mixing time of the high mixing machine is 10-30 min, and a mixing time of the planetary ball mill is 3-5 h.

7. The method for preparing a high-nickel cobalt-free positive electrode material with double reduction of residual alkali according to any one of claims 1 to 6, wherein the molar ratio of the Li in the lithium salt to the Ni_{y}Mn_{1-y}(OH)₂ is (1.03-1.08):1.

8. The method for preparing a high-nickel cobalt-free positive electrode material with double reduction of residual alkali according to any one of claims 1 to 7, wherein the first temperature curve in S2 is that the temperature is heated to 800-820 °C at the heating rate of 3-5 °C/min under the oxygen atmosphere, and after the required temperature reaches, the temperature is held for 10-20 h.

9. The method for preparing a high-nickel cobalt-free positive electrode material with double reduction of residual alkali according to any one of claims 1 to 8, wherein the second temperature curve in S5 is that the temperature is heated to 300-350 °C at the heating rate of 3-6 °C/min under the oxygen atmosphere, and after the required temperature reaches, the temperature is held for 6-15 h.

10. A high-nickel cobalt-free positive electrode material, prepared by using the method for preparing a high-nickel cobalt-free positive electrode material with double reduction of residual alkali according to any one of claims 1 to 9, wherein a chemical formula is LiₓNi_{y}Mn_{1-y}A_{z}O₂ and LaₐLi_{b}CoO₃ perovskite is coated on a surface, wherein 0.75<y≤0.95, 0.95≤x≤1.15, 0.001<z≤0.005, 0.5≤a≤0.9, and 0.3≤b≤1.5.
